# EUROPÄISCHE PATENTSCHRIFT

(11) **EP 3 513 019 B1**
(45) Veröffentlichungstag und Bekanntmachung des Hinweises auf die Patenterteilung: **07.06.2023**
(21) Anmeldenummer: 17758427.3
(22) Anmeldetag: 01.08.2017
(51) Int. Cl.: E05B 79/20, E05B 81/06, E05B 81/14, E05B 81/66, E05B 83/24, E05B 47/00, E05B 81/56

(54) **KRAFTFAHRZEUGTÜRSCHLOSS**
VEHICLE DOOR LOCK
SERRURE POUR UNE VÉHICULE

(30) Priorität: 14.09.2016 DE 102016117279
(43) Veröffentlichungstag der Anmeldung: 24.07.2019
(73) Patentinhaber: Kiekert AG, 42579 Heiligenhaus (DE)
(72) Erfinder: STURM, Christian, 47804 Krefeld (DE); SCHOLZ, Michael, 45136 Essen (DE); SCHIFFER, Holger, 40668 Meerbusch (DE); DROST, Bernhard, 46419 Isselburg (DE)
(86) Internationale Anmeldenummer: PCT/DE2017/100648
(87) Internationale Veröffentlichungsnummer: WO 2018/050149

(56) Entgegenhaltungen:
- WO-A1-2015/139678
- DE-A1-102011 003 808
- DE-A1-102013 217 377
- DE-A1-102014 001 789
- DE-U1- 29 722 484
- US-A1- 2014 088 826

## Beschreibung

Die Erfindung betrifft ein Kraftfahrzeugtürschloss, insbesondere Kraftfahrzeug-Fronthaubenschloss, mit einem Gesperre aus im Wesentlichen Drehfalle und Sperrklinke, welches mit einem Schlosshalterbügel an einer Haube wechselwirkt, und mit einer Entriegelungs-/Öffnungseinrichtung für die Haube, welche mit einer im Innern einer Kraftfahrzeugkarosserie vorgesehenen Handhabe ausgerüstet ist, wobei vorzugsweise eine zweimalige Betätigung der Handhabe zum Öffnen der Haube erforderlich ist.

Aus der Praxis bekannte Kraftfahrzeugtürschlösser bzw. Kraftfahrzeug-Fronthaubenschlösser sind regelmäßig mit einem Fanghaken ausgerüstet und werden deshalb als Fanghakenschloss bezeichnet. Ein Beispiel für ein solches Fanghakenschloss wird in der DE 199 38 687 B4 beschrieben. Der Fanghaken sorgt in diesem Zusammenhang ergänzend zu dem Gesperre aus der Drehfalle und Sperrklinke für die Sicherung des Schließbolzens bzw. Schlosshalterbügels.

Um ein solches Kraftfahrzeugtürschloss bzw. Fanghakenschloss zu öffnen, muss zunächst mit Hilfe der Entriegelungs-/Öffnungseinrichtung das Gesperre entriegelt und geöffnet werden. Im Anschluss daran wird die zugehörige Haube unter Definition eines Spaltes zwischen der Kraftfahrzeugkarosserie durch die Kraft einer Feder geöffnet. Der Fanghaken sorgt dabei nach wie vor für die Sicherung des Schlosshalterbügels. Zum Öffnen der Haube muss nun ein Bediener das Kraftfahrzeug verlassen und frontseitig durch den genannten Spalt hindurch den Fanghaken vom Schlosshalterbügel wegschwenken. Das ist unkomfortabel.

Aus diesem Grund beschreibt der gattungsbildende Stand der Technik nach der DE 10 2012 212 542 A1 ein Kraftfahrzeugtürschloss und insbesondere Kraftfahrzeug-Fronthaubenschloss, welches sich durch eine zweimalige Betätigung einer Entriegelungseinrichtung bzw. der Entriegelungs-/Öffnungseinrichtung vom Innern einer Kraftfahrzeugkarosserie aus öffnen lässt. Durch die erste Betätigung der im Innern der Kraftfahrzeugkarosserie vorgesehenen Handhabe wird eine erste Motorhaubenverriegelung ausgelöst. Dadurch stellt sich der zuvor bereits beschriebene Spalt zwischen der Haube und der Kraftfahrzeugkarosserie ein. Eine zweite Betätigung der Handhabe sorgt nun dafür, dass eine zweite Motorhaubenverriegelung entriegelt und geöffnet wird, so dass im Anschluss hieran die Haube frei ist und aufgeschwenkt werden kann.

Um ein versehentliches Öffnen der Haube zu verhindern, schlägt die bekannte Lehre nach der DE 10 2012 212 542 A1 einen Motorhaubenentriegelungsschalter vor, der abgefragt wird. Dazu kann ein entsprechendes Signal an den Fahrer übermittelt werden. Zu diesem Zweck ist bei der bekannten Lehre eine Motorhaubenwarnanzeige vorgesehen, welche auf einem Display dargestellt wird.

Aus den Druckschriften US 2014/088826 A1, DE 10 2013 217 377 A1, WO 2015/139678 A1 und DE 10 2014 001789 A1 sind ebenfalls gattungsgemäße Kraftfahrzeugtürschlosser bekannt. Die DE 10 2011 003808 A1 offenbart zudem ein Kraftfahrzeugtürschloss gemäß dem Oberbegriff von Anspruch 1.

Der Stand der Technik hat sich grundsätzlich bewährt, lässt allerdings noch Raum für weitere Verbesserungen zu. So sind Fehlfunktionen der bekannten Motorhaubenverriegelungsschalter denkbar, zumal diese an besonders kritischer Stelle im Innern des Motorraumes angeordnet sind und hier nicht nur Hitze, sondern auch unter Umständen Öl, Spritzwasser etc. ausgesetzt sind. Außerdem ist es denkbar, dass der Fahrer ein entsprechendes Warnsignal schlicht und ergreifend übersieht oder die Anzeige ausgefallen ist. Dann besteht nach wie vor die Möglichkeit, dass das Kraftfahrzeug bei geöffneter Haube bewegt wird, so dass die Haube unbeabsichtigt aufschwenken kann und die Sicht des Fahrers nach vorne schlagartig verhindert. Das stellt ein erhebliches Sicherheitsrisiko dar.

Der Erfindung liegt das technische Problem zugrunde, ein derartiges Kraftfahrzeugtürschloss so weiter zu entwickeln, dass bei einfachem Aufbau die Sicherheit deutlich gesteigert ist.

Zur Lösung dieser technischen Problemstellung ist bei einem gattungsgemäßen Kraftfahrzeugtürschloss vorgesehen, dass das Gesperre nach zumindest einmaliger Betätigung der Handhabe eine Vorraststellung mit nach wie vor gefangenem Schlosshalterbügel einnimmt, wobei die Haube aus der Vorraststellung heraus durch ein separat initiiertes motorisches Abheben der Sperrklinke von der Drehfalle geöffnet wird bzw. geöffnet werden kann.

Das separat initiierte motorische Abheben der Sperrklinke von der Drehfalle findet im Allgemeinen mit Hilfe einer von der Handhabe im Innern der Kraftfahrzeugkarosserie realisierten unabhängigen Bedieneinheit statt. Besonders vorteilhaft handelt es sich bei der Bedieneinheit um eine solche, welche das separat initiierte motorische Abheben der Sperrklinke drahtlos bewirkt und zu diesem Zweck regelmäßig vom Fahrzeugführer mitgeführt wird. Besonders bevorzugt hat sich in diesem Zusammenhang ein Funkschlüssel.

Dieser Funkschlüssel wird meistens ohnehin benötigt, um das Kraftfahrzeug fernbedienen zu können. Beispielsweise lassen sich mit Hilfe des Funkschlüssels die einzelnen Kraftfahrzeugtürschlösser entriegeln. Im Rahmen der Erfindung übernimmt nun der Funkschlüssel bzw. die von der Handhabe unabhängige und vorzugsweise fernbedienbare Bedieneinheit zusätzlich noch eine weitere Funktion. Denn zum Öffnen der Haube ist es zunächst erforderlich, dass das Gesperre aus im wesentlichen Drehfalle und Sperrklinke durch eine wenigstens einmalige Betätigung der Handhabe im Innern der Kraftfahrzeugkarosserie entriegelt und meistens auch geöffnet wird. Dadurch geht die Haube in die Vorraststellung über. Zugleich sorgt eine typischerweise die Haube in Richtung Öffnen beaufschlagende Feder oder sorgen mehrere Federn dafür, dass sich zwischen der Haube und der Kraftfahrzeugkarosserie ein Spalt einstellt.

Durch diesen Spalt hindurch kann ein Bediener die Haube ergreifen und öffnen. In der Vorraststellung ist dies jedoch nicht möglich. Denn in der Vorraststellung sorgt die in die Vorrast der Drehfalle eingefallene Sperrklinke nach wie vor für die Sicherung des Schlosshalterbügels und damit der Haube. Um nun die Haube aus der Vorraststellung heraus aufschwenken zu können, erfolgt das separat initiierte motorische Abheben der Sperrklinke von der Drehfalle mit Hilfe der drahtlos zu beaufschlagenden Bedieneinheit respektive des Funkschlüssels.

Zu diesem Zweck ist zur motorischen Beaufschlagung der Sperrklinke ein Aktuator vorgesehen. Bei dem Aktuator kann es sich um einen Schwenk- und/oder Linearaktuator handeln. Im erstgenannten Fall des Schwenkaktuators sorgt der betreffende Schwenkmotor mittelbar oder unmittelbar dafür, dass die Sperrklinke von der Drehfalle bzw. der Vorrast der Drehfalle abgehoben wird, und zwar durch eine Schwenkbewegung. Ähnliches mag der Linearmotor bewirken, der beispielsweise mit Hilfe einer Stellstange die Sperrklinke verschwenkt. Als Folge hiervon kann der Bediener nun die Haube aufschwenken.

Dazu wird der fragliche Aktuator mit Hilfe der von der Handhabe unabhängigen Bedieneinheit in Form eines Funkschlüssels beaufschlagt, wie dies zuvor bereits im Detail beschrieben wurde. In diesem Zusammenhang ist es denkbar, dass die Bedieneinheit bzw. der Funkschlüssel durch den Fahrzeugführer individualisiert wird bzw. die Position einer Bedieneinheit frontseitig des Kraftfahrzeug-Fronthaubenschlosses zwingend erfordert. Eine Individualisierung der Bedieneinheit bzw. des Funkschlüssels im Hinblick auf den Fahrzeugführer ist beispielsweise derart denkbar, dass sich der Fahrzeugführer beispielsweise über einen Fingerabdruck an der Bedieneinheit bzw dem Funkschlüssel anmelden muss und auf diese Weise sichergestellt ist, dass nur und ausschließlich der Fahrzeugführer die Bedieneinheit respektive den Funkschlüssel nutzen kann.

Eine örtliche Eingrenzung der Position der Bedieneinheit bzw. des Funkschlüssels lässt sich derart unschwer realisieren, dass das erfindungsgemäße Kraftfahrzeugtürschloss mit einer eigenen Sende-/Empfangseinheit ausgerüstet ist, welche mit einer korrespondierenden Sende-/Empfangseinheit der Bedieneinheit - und nur dieser - kommunizieren kann. Durch eine Begrenzung der Reichweite dieser Kommunikation auf einen Bereich von beispielsweise 1m oder 2m Entfernung kann sichergestellt werden, dass der Bediener die Bedieneinheit nur dann erfolgreich zum Abheben der Sperrklinke von der Drehfalle in der Vorraststellung des Gesperres nutzen kann, wenn er sich unmittelbar im Bereich des fraglichen Kraftfahrzeugtürschlosses bzw. der Fronthaube im Beispielfall befindet. Hierdurch wird die Sicherheit enorm gesteigert, weil das Öffnen der Haube erfindungsgemäß und aktiv einen zweifachen Prozess des Bedieners erfordert.

Zunächst einmal muss der Bediener die Sperrklinke ausgehend von der Vorraststellung des Gesperres motorisch mit Hilfe des Aktuators abheben. Davor muss zu allererst die Vorraststellung des Gesperres eingenommen werden, und zwar durch eine der Handhabe durch den Bediener. Jetzt kann der Aktuator die Sperrklinke von der Drehfalle abheben. Das ist nur dann möglich, wenn sich der Bediener in unmittelbarer Nähe des Kraftfahrzeugtürschlosses bzw. des Kraftfahrzeug-Fronthaubenschlosses befindet. Zum Aufschwenken der Haube kann dann der Bediener durch den Spalt zwischen der Haube und der Kraftfahrzeugkarosserie hindurch die Haube ergreifen und hochschwenken. Jedenfalls wird hierdurch ein Maximum an Sicherheit gewährleistet und lassen sich insbesondere Szenarien ausschließen und beherrschen, bei welchen die Haube geöffnet ist und das Fahrzeug dennoch bewegt werden kann.

Selbstverständlich ist es in diesem Zusammenhang zusätzlich möglich, ein Warnsignal mit Hilfe eines Sensors zu erzeugen, falls der Bediener die Haube im Anschluss an das Abheben der Sperrklinke von der Drehfalle aus der Vorraststellung heraus nicht aufschwenkt. Dieses Warnsignal kann grundsätzlich auch dazu genutzt werden, ein Losfahren mit dem Kraftfahrzeug zu verhindern.

Nach vorteilhafter Ausgestaltung weist der zuvor bereits beschriebene Aktuator neben dem obligatorischen Elektromotor zusätzlich ein Stellglied auf. Bei dem Stellglied kann es sich je nach Auslegung des Elektromotors bzw. des Aktuators um ein Schwenkglied und/oder ein Linearstellglied handeln.

Darüber hinaus ist ein zusätzlicher Sensor vorgesehen, welcher die Vorraststellung abfragt. Dieser Sensor kann auch mit demjenigen Sensor zusammenfallen, welcher die vollständig geöffnete und abgelegte Haube feststellt und das zuvor beschriebene Warnsignal abgibt. In jedem Fall sind der Sensor und der Aktuator an eine gemeinsame Steuereinheit angeschlossen.

Die Auslegung ist dabei so gewählt, dass die Steuereinheit eine Beaufschlagung des Aktuators zum Abheben der Sperrklinke nur dann zulässt, wenn der Sensor die Vorraststellung des Gesperres gemeldet hat. Hierdurch wird ein weiterer Sicherheitsgewinn zur Verfügung gestellt. Denn mit Hilfe des die Vorraststellung abfragenden Sensors ist gewährleistet, dass die zusätzliche Bedieneinheit für das separat initiierte motorische Abheben der Sperrklinke von der Drehfalle in der Vorraststellung tatsächlich erst dann auf die Sperrklinke arbeitet und arbeiten kann, wenn diese in die Vorrast der Drehfalle eingreift. D. h., die von der Handhabe im Innern des Kraftfahrzeuges unabhängige Bedieneinheit zur drahtlosen Beaufschlagung des Aktuators ist ausdrücklich nicht in der Lage, die Sperrklinke von der Drehfalle abzuheben, solange sich das betreffende Kraftfahrzeugtürschoss und damit das Gesperre in geschlossenem Zustand bzw. der Hauptraststellung befindet. Vielmehr kann die separate Bedieneinheit nur dann für das Abheben der Sperrklinke von der Drehfalle sorgen, wenn sich das Gesperre tatsächlich in der Vorraststellung befindet. Das trägt erneut zur erhöhten Sicherheit bei.

Im Rahmen der Bedienung wird im Allgemeinen so vorgegangen, dass die im Innern der Kraftfahrzeugkarosserie vorgesehene Handhabe einmalig betätigt wird, um das Gesperre in die Vorraststellung zu überführen. Die erfolgreiche Einnahme der Vorraststellung wird dabei vorteilhaft mit Hilfe des Sensors abgefragt, welcher die Vorraststellung sensiert. Anschließend an die einmalige Betätigung der Handhabe kann die Haube geöffnet werden, nämlich durch das beschriebene Beaufschlagen der Bedieneinheit. Das Beaufschlagen der Bedieneinheit mündet in ein Abheben der Sperrklinke von der Drehfalle in diesem Zusammenhang nur dann, wenn zuvor das Gesperre sicher in der Vorraststellung befindlich ist und der fragliche Sensor dies an die gemeinsame Steuereinheit für den Sensor und den Aktuator gemeldet hat.

Grundsätzlich kann zur Bedienung auch so vorgegangen werden, dass die Handhabe zweimalig betätigt wird, um das Gesperre in die Vorraststellung zu überführen und anschließend durch Beaufschlagen der Bedieneinheit die Haube geöffnet werden kann. Die zweimalige Betätigung der Handhabe empfiehlt sich beispielsweise für den Fall, dass nicht mit einem zentral an der Front des Kraftfahrzeuges vorgesehenen Kraftfahrzeugtürschloss bzw. Fronthaubenschloss gearbeitet wird, sondern beispielsweise zwei an seitlichen Längsrändern der Haube platzierte Kraftfahrzeugtürschlösser vorgesehen sind, die separat mit Hilfe der Handhabe in die Vorraststellung überführt werden müssen. Selbstverständlich kann auch bei einem nur einen einzigen realisierten Kraftfahrzeugtürschloss bei der Bedienung so gearbeitet werden, dass die Handhabe zweimalig betätigt wird, um das Gesperre in die Vorraststellung zu überführen.

In jedem Fall wird selbstverständlich und vorteilhaft auch in diesem Fall die Einnahme der Vorraststellung seitens des Gesperres mit Hilfe des Sensors überprüft und abgefragt, welcher die Vorraststellung sensiert. Nur bei erfolgreicher Einnahme der Vorraststellung kann die von der Handhabe unabhängige Bedieneinheit drahtlos den Aktuator beaufschlagen, so dass die Sperrklinke von der Vorrast an der Drehfalle abgehoben wird und die Haube insgesamt geöffnet werden kann.

Im Ergebnis wird ein Kraftfahrzeugtürschloss zur Verfügung gestellt, welches unter Rückgriff auf einen frappierend einfachen Aufbau einen erheblichen Sicherheitsgewinn gegenüber dem Stand der Technik zur Verfügung stellt. Denn die Öffnung der Haube ist zunächst einmal unabhängig von etwaigen Sensorsignalen, weil die Haube durchgängig allenfalls in eine teilweise geöffnete Position mit Hilfe der Handhabe überführt werden kann. Da das Kraftfahrzeugtürschloss in dieser teilweise geöffneten Position seine Vorraststellung einnimmt, wird der Schlosshalterbügel unverändert gesichert. Nur dann, wenn sich der Bediener in unmittelbarer Nähe zu der zu öffnenden Haube befindet und gleichzeitig aktiv die von der Handhabe im Innern der Kraftfahrzeugkarosserie unabhängige Bedieneinheit betätigt, lässt sich überhaupt die Haube öffnen. Hierin sind die wesentlichen Vorteile zu sehen.

Im Folgenden wird die Erfindung anhand einer lediglich ein Ausführungsbeispiel darstellenden Zeichnung näher erläutert. Es zeigen:
- Fig. 1: ein Kraftfahrzeug zusammen mit dem erfindungsgemäßen Kraftfahrzeugtürschloss,
- Fig. 2: das Kraftfahrzeugtürschloss im Detail in geschlossenem Zustand und
- Fig. 3: das Kraftfahrzeugtürschloss nach der Erfindung in Vorraststellung und einen angedeuteten Öffnungsvorgang.

In den Figuren ist zunächst einmal ein Kraftfahrzeug 1 dargestellt, welches mit einem Kraftfahrzeugtürschloss und genauer einem Kraftfahrzeug-Fronthaubenschloss 2 nach der Erfindung ausgerüstet ist. Das Kraftfahrzeug-Fronthaubenschloss 2 findet sich im vorderen Bereich des Kraftfahrzeuges 1 und dient dazu, eine Haube 3 bzw. Fronthaube zu sichern. Grundsätzlich kann das Kraftfahrzeugtürschloss auch zur Sicherung von anderen Kraftfahrzeugtüren, Kraftfahrzeugseitentüren, einer Heckklappe, einem Kraftfahrzeugdeckel oder sogar einem Tankdeckel dienen. Der Begriff Haube erfasst also sämtliche Klappen am Kraftfahrzeug 1.

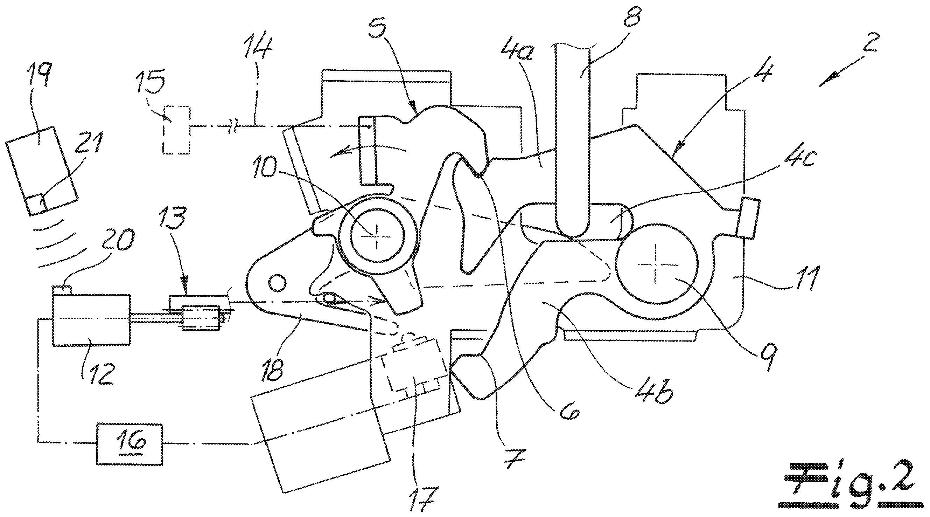

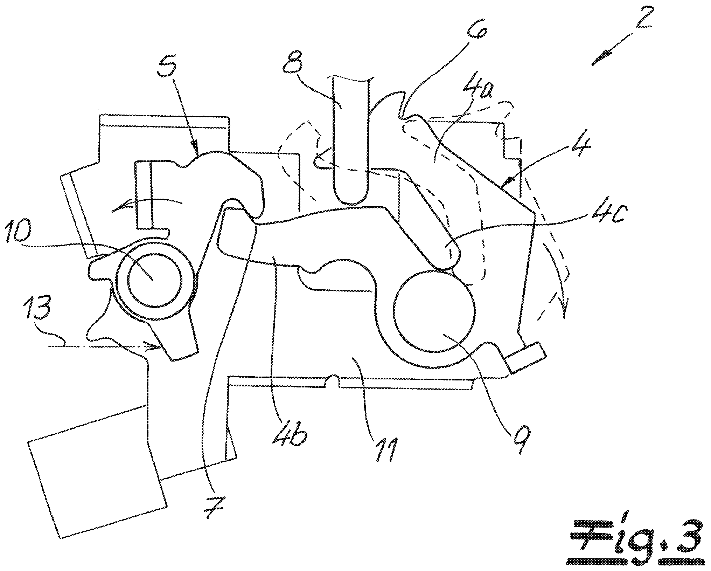

Das Kraftfahrzeugtürschloss bzw. im Ausführungsbeispiel das Kraftfahrzeug-Fronthaubenschloss 2 verfügt ausweislich der Detaildarstellungen in den Fig. 2 und 3 über ein Gesperre 4, 5 aus im Wesentlichen Drehfalle 4 und Sperrklinke 5. Bei der Drehfalle 4 handelt es sich um eine Gabelfalle mit zwei Gabelarmen 4a, 4b. Der Gabelarm 4a ist als Hauptrastarm 4a ausgelegt. Bei dem Gabelarm 4b handelt es sich um einen Vorrastarm 4b. Der Hauptrastarm 4a ist mit einer Hauptrast bzw. Hauptrastausnehmung 6 ausgerüstet. An dem Vorrastarm 4b findet sich dementsprechend eine Vorrast bzw. Vorrastausnehmung 7.

In der geschlossenen Position bzw. Hauptrastposition nach der Fig. 2 greift die Sperrklinke 5 in die Hauptrast 6 ein. Demgegenüber korrespondiert die Vorraststellung nach der Fig. 3 dazu, dass die Sperrklinke 5 in die Vorrast 7 eingefallen ist. In beiden Fällen, d. h. sowohl in der geschlossenen Position bzw. Hauptrastposition des Gesperres 4, 5 nach der Fig. 2 als auch in der Vorraststellung entsprechend der Fig. 3, wird ein Schlosshalterbügel bzw. Schließbolzen 8 jeweils gefangen, und zwar in einem Schlitz 4c zwischen den beiden Gabelarmen 4a, 4b der Drehfalle 4.

Die Drehfalle 4 lässt sich um eine Achse 9 verschwenken. Die Achse 9 wird von einem Stufendorn bzw. einem Gelenkbolzen definiert, welcher in einer das Gesperre 4, 5 tragenden Schlossplatte 11 verankert ist. Die Sperrklinke 5 ist um eine Achse 10 drehbar gelagert. Zur Definition der Achse 10 ist erneut ein Stufendorn oder Gelenkbolzen vorgesehen, welcher an die Schlossplatte 11 angeschlossen ist.

In den Detailansichten nach den Fig. 2 und 3 erkennt man noch einen Aktuator 12, 13. Außerdem ist eine Entriegelungs-/Öffnungseinrichtung 14, 15 vorgesehen. Die Entriegelungs-/Öffnungseinrichtung 14, 15 für die Haube 3 und folglich das Gesperre 4, 5 ist mit einer im Innern einer Kraftfahrzeugkarosserie des Kraftfahrzeuges 1 vorgesehenen Handhabe 15 ausgerüstet. Die Handhabe 15 arbeitet über ein Verbindungsmittel 14 auf die Sperrklinke 5 im Beispielfall.

Dabei ist die Auslegung insgesamt so getroffen, dass im Ausführungsbeispiel bei einer einmaligen oder zweimaligen Betätigung der Handhabe 15 im Innern der Kraftfahrzeugkarosserie des Kraftfahrzeuges 1 über das Verbindungsmittel 14 die Sperrklinke 5 von der Drehfalle 4 ausgehend von der geschlossenen Position nach der Fig. 2 abgehoben wird. Hierzu korrespondiert eine Gegenuhrzeigersinn der Sperrklinke 5 um ihre Achse 10, wie dies in der zugehörigen Fig. 2 angedeutet ist. Nach Beendigung der Beaufschlagung der Handhabe 15 wird die Entriegelungs-/Öffnungseinrichtung 14, 15 zurückgestellt, so dass das Gesperre 4, 5 von der geschlossenen Stellung nach der Fig. 2 in die Vorraststellung gemäß der Fig. 3 übergeht.

Denn ein Abheben der Sperrklinke 5 von der Drehfalle 4 in der geschlossenen Position nach der Fig. 2 hat zur Folge, dass die Drehfalle 4 federunterstützt im Uhrzeigersinn um ihre Achse 9 verschwenkt wird. Da nach Beendigung der Beaufschlagung der Handhabe 15 die Sperrklinke 5 wieder in ihre Ausgangslage nach der Fig. 2 zurückgekehrt ist, kann die Sperrklinke 5 nunmehr in die Vorrast 7 der Drehfalle 4 einfallen. Demgegenüber ist die Sperrklinke 5 in der geschlossenen Position bzw. Hauptraststellung nach der Fig. 2 in die Hauptrast 6 eingerastet gewesen.

Auch mit Hilfe des Aktuators 12, 13 kann die Sperrklinke 5 von der Drehfalle 4 abgehoben werden. Der Aktuator 12, 13 ist zur motorischen Beaufschlagung der Sperrklinke 5 - unabhängig von der Entriegelungs-/Öffnungseinrichtung 14, 15 - vorgesehen. Im Ausführungsbeispiel handelt es sich bei dem Aktuator 12, 13 um einen Linearaktuator 12, 13, der über ein Linearstellglied 13 auf die Sperrklinke 5 arbeitet. Das Linearstellglied 13 wird mit Hilfe eines Motors bzw. Elektromotors 12 als weiterem Bestandteil des Aktuators 12, 13 in Linearrichtung bewegt, wie dies die Fig. 3 durch einen entsprechenden Pfeil andeutet. Im Ausführungsbeispiel wird das Stellglied 13 nach rechts linear mit Hilfe des Elektromotors 12 verschoben und fährt dadurch gegen einen Ansatz der Sperrklinke 5, so dass die Sperrklinke 5 mit Hilfe der Stellstange bzw. des Linearstellgliedes 13 als Folge hiervon im Gegenuhrzeigersinn um ihre Achse 10 verschwenkt wird. Das ist ebenfalls in der Fig. 3 durch einen entsprechenden Pfeil angedeutet.

Ausgehend von der Vorraststellung nach der Fig. 3 mit der in die Vorrast 7 eingefallenen Sperrklinke 5 führt die Beaufschlagung mit Hilfe des Aktuators 12, 13 dazu, dass die Drehfalle 4 insgesamt von der Sperrklinke 5 freikommt. Der in der Vorraststellung nach der Fig. 3 nach wie vor gefangene Schlosshalterbügel 8 lässt sich demzufolge komplett von dem Gesperre 4, 5 lösen und die Haube 3 kann wunschgemäß geöffnet bzw. aufgeschwenkt werden.

Der Aktuator 12, 13 bzw. dessen Elektromotor 12 ist an eine Steuereinheit 16 angeschlossen. Auch ein Sensor 17 gibt seine Signale an die betreffende gemeinsame Steuereinheit 16 ab. Mit Hilfe des Sensors 17, bei dem es sich im Ausführungsbeispiel um einen Schalter handelt oder handeln kann, wird die Vorraststellung nach der Fig. 3 abgefragt. Dazu ist ein Übertragungshebel bzw. Schalthebel 18 vorgesehen, welcher schwenkbar an die Schlossplatte 11 angelenkt ist und den Bewegungen des Schlosshalterbügels 8 folgt. Der Übertragungshebel bzw. Schalthebel 18 wird mit Hilfe einer Feder dauerhaft in Anlage an den Schlosshalterbügel 8 angelegt. Jedenfalls kann mit Hilfe des Sensors bzw. Schalters 17 in Verbindung mit dem Übertragungshebel 18 unter anderem die Vorraststellung nach der Fig. 3 sensorisch erfasst und an die Steuereinheit 16 übermittelt werden.

Nur dann, wenn sich das Gesperre 4, 5 tatsächlich und einwandfrei in der Vorraststellung gemäß der Fig. 3 befindet, wird seitens der Steuereinheit 16 überhaupt eine Stellbewegung des Aktuators 12, 13 zugelassen. Die Stellbewegung des Aktuators 12, 13 wird darüber hinaus auch nur dann eingeleitet oder initiiert, wenn eine Bedieneinheit 19 eine Beaufschlagung erfährt. Bei der Bedieneinheit 19 handelt es sich um eine drahtlos arbeitende Bedieneinheit 19, welche den Aktuator 12, 13 drahtlos beaufschlagt. Dazu mag eine Sende-/Empfangseinheit 20 vorgesehen sein, die im Ausführungsbeispiel im Bereich des Kraftfahrzeug-Fronthaubenschlosses 2 angeordnet ist bzw. in das fragliche Kraftfahrzeug-Fronthaubenschloss 2 integriert werden kann. Diese gleichsam kraftfahrzeugseitige Sende-/Empfangseinheit 20 kommuniziert drahtlos mit einer weiteren Sende-/Empfangseinheit 21, die in der mobilen Bedieneinheit 19 vorgesehen und realisiert ist. Das wird durch entsprechend angedeutete Funkwellen oder allgemein elektromagnetische Wellen in den Figuren bildlich dargestellt.

Die Funktionsweise ist wie folgt. Zum Entriegeln und Öffnen der Haube bzw. Fronthaube 3 des Kraftfahrzeuges 1 wird zunächst die Handhabe 15 im Innern der zugehörigen Kraftfahrzeugkarosserie betätigt. Das kann einmalig oder zweimalig geschehen. Die Betätigung der Handhabe 15 sorgt über das hiervon beaufschlagte Verbindungsmittel 14, bei dem es sich vorteilhaft um einen Seilzug oder Bowdenzug handelt oder handeln kann, dafür, dass die Sperrklinke 5 von der Drehfalle 4 abgehoben wird. Das Kraftfahrzeug-Fronthaubenschloss 2 und sein Gesperre 4, 5 befindet sich hierbei in der geschlossenen Position nach der Fig. 2.

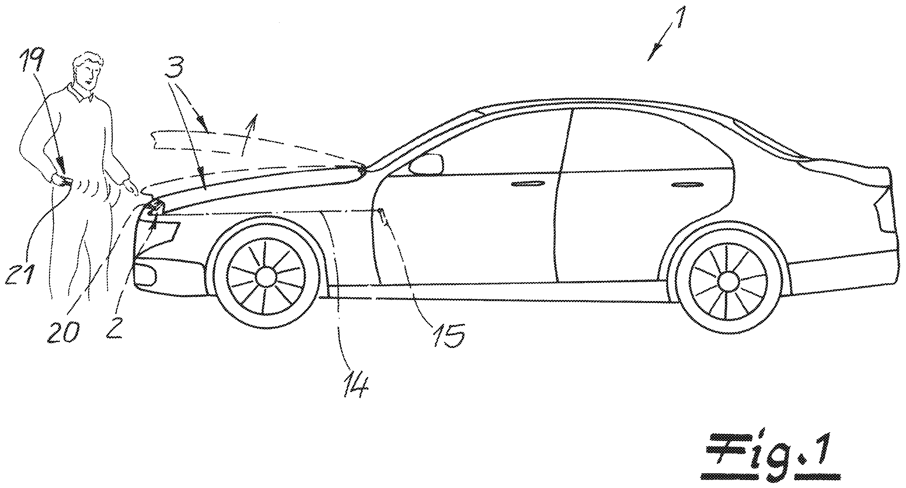

Da die Handhabe 15 nur zu einer kurzen Beaufschlagung der Sperrklinke 5 korrespondiert und danach unmittelbar zurückgestellt wird, so dass auch die Sperrklinke 5 wieder ihre Ursprungsposition nach der Fig. 2 einnimmt, kann die Drehfalle 4 federunterstützt bis lediglich zur Vorraststellung entsprechend der Fig. 3 um ihre Achse 9 verschwenkt werden. Hierfür sorgt eine nicht ausdrücklich dargestellte Feder, welche die Haube 3 und/oder die Drehfalle 4 in entsprechendem Sinne beaufschlagen mag. In der Vorraststellung ist die Haube 3 leicht geöffnet, wie dies in der Fig. 1 gestrichelt dargestellt ist.

Die leicht geöffnete Haube 3 korrespondiert dazu, dass das Kraftfahrzeug-Fronthaubenschloss 2 die Vorraststellung nach der Fig. 3 einnimmt. Der an die Haube bzw. Fronthaube 3 angeschlossene Schlosshalterbügel 8 wird nach wie vor im Schlitz 4c zwischen den beiden Gabelarmen 4a und 4b der Drehfalle 4 geführt und gehalten, so dass das Gesperre 4, 5 und mit ihm das Kraftfahrzeug-Fronthaubenschloss 2 unverändert gesichert sind. Gleiches gilt für die Haube 3.

Um nun ausgehend von dieser Vorraststellung nach der Fig. 3 die leicht geöffnete Haube 3 komplett aufschwenken zu können, muss die Sperrklinke 5 von der Drehfalle 4 ausgehend von der Vorraststellung nach der Fig. 3 abgehoben werden. Dadurch verlässt die Sperrklinke 5 die Vorrast 7 der Drehfalle 4 und kann folglich die Drehfalle 4 komplett um ihre Achse 9 aufschwenken. Dieser Vorgang lässt sich durch die bereits angesprochene Feder bewerkstelligen. Es ist aber auch möglich, dass die Haube bzw. Fronthaube 3 in der leicht geöffneten und gestrichelt dargestellten Position entsprechend der Fig. 1 gleichsam durch die Kraft der Feder in der Schwebe gehalten wird. Dann muss ein Bediener durch den sich zwischen der Haube 3 und der Karosserie einstellenden Spalt hindurch die Haube 3 ergreifen und aktiv aufschwenken.

Die letztgenannte Variante mit der in der Vorraststellung nach der Fig. 3 gleichsam schwebenden Haube 3 ist mit dem besonderen Vorteil verbunden, dass die Haube 3 auch dann zumindest in die gestrichelte und leicht geöffnete Position überführt wird, wenn sie seitens des Bedieners äußerst langsam abgelegt wird. Denn dieses Ablegen korrespondiert dazu, dass der Schlosshalterbügel 8 die in der Fig. 3 gestrichelt dargestellte vollständig geöffnete Drehfalle 4 kraftlos oder praktisch kraftlos zumindest bis in die Vorraststellung nach der Fig. 3 verschwenken kann. Ausgehend von der Vorraststellung nach der Fig. 3 muss dann erst die Kraft der zuvor bereits angesprochenen Feder überwunden werden, um die Hauptraststellung bzw. geschlossene Position nach der Fig. 2 erreichen zu können. D. h., in diesem Fall wird der Schlosshalterbügel 8 auch bei einem leichten Ablegen der Haube bzw. Fronthaube 3 gesichert, nämlich in der obligatorisch erreichten Vorraststellung nach der Fig. 3 beim beschriebenen Schließvorgang.

Beim Öffnen der Haube bzw. Fronthaube 3 wird nun ausgehend von der Vorraststellung nach der Fig. 3 die Haube 3 aus der Vorraststellung heraus durch ein separat initiiertes motorisches Abheben der Sperrklinke 5 von der Drehfalle 4 geöffnet. Dieses separat initiierte motorische Abheben der Sperrklinke 5 von der Drehfalle 4 wird erfindungsgemäß mit Hilfe des Aktuators 12, 13 erreicht.

Der Aktuator 12, 13 kann dabei erst dann auf die Sperrklinke 5 - wie beschrieben - arbeiten, wenn die den Aktuator 12, 13 beaufschlagende Steuereinheit 16 im Rahmen einer Abfrage des Sensors bzw. Schalters 17 die einwandfreie Einnahme der Vorraststellung nach der Fig. 3 ermittelt hat. Außerdem muss der Aktuator 12, 13 mit Hilfe der von der Handhabe 15 im Innern des Kraftfahrzeuges 1 unabhängigen Bedieneinheit 19 beaufschlagt werden. Bei der Bedieneinheit 19 kann es sich um einen Funkschlüssel handeln, der typischerweise ohnehin zum Öffnen der anderen Türen des Kraftfahrzeuges vorhanden ist und zu diesem Zweck mit einem weiteren Schalter ausgerüstet sein mag.

Jedenfalls sorgt die Beaufschlagung der von der Handhabe 15 unabhängigen Bedieneinheit 19 dafür, dass ein entsprechendes Öffnungssignal von der Sende-/Empfangseinheit 21 der Bedieneinheit 19 ausgesandt wird. Dieses Öffnungssignal wird seitens der karosserieseitigen Sende-/Empfangseinheit 20 empfangen und in eine entsprechende Stellbewegung des Aktuators 12, 13 bzw. dessen Linearstellglied 13 umgesetzt. Das setzt allerdings voraus, dass sich die Bedieneinheit 19 im Sende- bzw. Empfangsbereich der karosserieseitigen Sende-/Empfangseinheit 20 als Bestandteil des Kraftfahrzeugtürschlosses bzw. des Kraftfahrzeug-Fronthaubenschlosses 2 befindet. Dieser Sende-Empfangsbereich mag eng umrissen sein und korrespondiert im Ausführungsbeispiel typischerweise dazu, dass sich ein die Bedieneinheit 19 beaufschlagender Bediener oder ein in der Fig. 1 angedeuteter Fahrzeugführer unmittelbar an der Front des Kraftfahrzeuges 1 benachbart zum Kraftfahrzeug-Fronthaubenschloss 2 befindet. Dadurch ist sichergestellt, dass der fragliche Bediener oder Fahrzeugführer nach der Beaufschlagung der Bedieneinheit 19 zum Öffnen der Haube 3 diese auch tatsächlich ergreift und hochschwenkt.

Denn die Beaufschlagung des Aktuators 12, 13 hat zur Folge, dass das Linearstellglied 13 im Ausführungsbeispiel entsprechend der Vorraststellung nach der Fig. 3 nach rechts bewegt wird und die Sperrklinke 5 von der Vorrast 7 an der Drehfalle 4 abhebt. Jetzt ist die Drehfalle 4 von der Sperrklinke 5 frei und kann der Schlosshalterbügel 8 aus dem Schlitz 4c entfernt werden. Die an den Schlosshalterbügel 8 angeschlossene Haube 3 lässt sich folglich öffnen und hochschwenken.

In diesem Zusammenhang ist es denkbar, dass der Bediener bzw. Fahrzeugführer so lange die Bedieneinheit 19 beaufschlagt und folglich die Sperrklinke 5 von der Drehfalle 4 in der Vorraststellung nach der Fig. 3 abhebt, bis der fragliche Bediener mit beispielsweise seiner anderen Hand die Haube 3 so weit aufgeschwenkt hat, dass die Drehfalle 4 bzw. das Gesperre 4, 5 geöffnet worden ist, wie dies gestrichelt in der Fig. 3 angedeutet wird. Es ist aber auch möglich, dass eine einmalige kurze Betätigung der Bedieneinheit 19 ausreicht, um die Sperrklinke 5 von der Drehfalle 4 ausgehend von der Vorraststellung nach der Fig. 3 abzuheben und im Anschluss daran die Drehfalle 4 beaufschlagt durch die zuvor bereits angesprochene Feder in Öffnungsrichtung um ihre Achse 9 automatisch aufschwenkt. Hierzu korrespondiert die in der Fig. 3 angedeutete Uhrzeigersinnbewegung.

Die erstgenannte Vorgehensweise zum Öffnen des Gesperres 4, 5 ausgehend von der Vorraststellung ohne Federkraft allein durch eine manuelle Beaufschlagung seitens des Bedieners ist besonders vorteilhaft. Denn diese Vorgehensweise setzt voraus, dass der Bediener bzw. Fahrzeugführer einerseits die Bedieneinheit 19 beaufschlagt, um die Sperrklinke 5 von der Drehfalle 4 abzuheben und andererseits gleichzeitig die Haube 3 in Richtung Öffnen verschwenkt. Das kann beispielsweise derart erfolgen, dass der Bediener mit der linken (rechten) Hand die Bedieneinheit 19 beaufschlagt und mit der rechten (linken) Hand die Haube 3. Dadurch ist auf jeden Fall sichergestellt, dass die Haube 3 in diesem Fall geöffnet wird oder geöffnet werden muss. Sollte der Bediener die Haube 3 anschließend loslassen oder langsam absenken, so sorgt der mit dem Gesperre 4, 5 wechselwirkende Schlosshalterbügel 8 zumindest dafür, dass das Gesperre 4, 5 die Vorraststellung nach der Fig. 3 (wieder) einnimmt. Das Kraftfahrzeugtürschloss bzw. Kraftfahrzeug-Fronthaubenschloss 2 ist also gesichert. Denn bei diesem Vorgang müssen keine Kräfte einer Feder überwunden werden und überführt der Schlosshalterbügel gleichsam zwanglos oder kraftlos das Gesperre 4, 5 in die Vorraststellung nach der Fig. 3.

## Patentansprüche

1. Kraftfahrzeugtürschloss, insbesondere Kraftfahrzeug-Fronthaubenschloss (2), mit einem Gesperre (4, 5) aus im Wesentlichen Drehfalle (4) und Sperrklinke (5), welches mit einem Schlosshalterbügel (8) an einer Haube (3) wechselwirkt, und mit einer Entriegelungs-/Öffnungseinrichtung (14, 15) für die Haube (3), welche mit einer im Innern einer Kraftfahrzeugkarosserie vorgesehenen Handhabe (15) ausgerüstet ist, wobei vorzugsweise eine zweimalige Betätigung der Handhabe (15) zum Öffnen der Haube (3) erforderlich ist, wobei das Gesperre (4, 5) nach zumindest einmaliger Betätigung der Handhabe (15) eine Vorraststellung mit nach wie vor gefangenem Schlosshalterbügel (8) einnimmt, **dadurch gekennzeichnet, dass** die Haube (3) aus der Vorraststellung heraus durch ein separat initiiertes motorisches Abheben der Sperrklinke (5) von der Drehfalle (4) geöffnet wird, wobei zur motorischen Beaufschlagung der Sperrklinke (5) ein Aktuator (12, 13) vorgesehen ist, wobei der Aktuator (12, 13) mittels einer von der Handhabe (15) unabhängigen Bedieneinheit (19) in Form eines Funkschlüssels beaufschlagt wird, wobei ein Sensor (17) vorgesehen ist, welcher die Vorraststellung abfragt, wobei der Sensor (17) und der Aktuator (12, 13) an eine gemeinsame Steuereinheit (16) angeschlossen sind, welche eine Beaufschlagung des Aktuators (12, 13) zum Abheben der Sperrklinke (5) von der Drehfalle (4) nur dann zulässt, wenn der Sensor (17) die Vorraststellung des Gesperres (4, 5) gemeldet hat.

2. Kraftfahrzeugtürschloss nach Anspruch 1, **dadurch gekennzeichnet, dass** es sich bei dem Aktuator (12, 13) um einen Schwenk- und/oder Linearaktuator (12, 13) handelt.

3. Kraftfahrzeugtürschloss nach Anspruch 2, **dadurch gekennzeichnet, dass** der Aktuator (12, 13) einen Elektromotor (12) und ein Stellglied, beispielsweise ein Schwenkglied und/oder ein Linearstellglied (13), aufweist.

4. Kraftfahrzeugtürschloss nach Anspruch 3, **dadurch gekennzeichnet, dass** die Bedieneinheit (19) den Aktuator (12, 13) drahtlos beaufschlagt.

5. Kraftfahrzeugtürschloss nach einem der Ansprüche 1 bis 4, **dadurch gekennzeichnet, dass** die Handhabe (15) einmalig betätigt wird, um das Gesperre (4, 5) in die Vorraststellung zu überführen und anschließend durch Beaufschlagung der Bedieneinheit (19) die Haube geöffnet werden kann.

6. Kraftfahrzeugtürschloss nach einem der Ansprüche 1 bis 5, **dadurch gekennzeichnet, dass** die Handhabe (15) zweimalig betätigt wird, um das Gesperre (4, 5) in die Vorraststellung zu überführen und anschließend durch Beaufschlagen der Bedieneinheit (19) die Haube (3) geöffnet werden kann.

7. Kraftfahrzeugtürschloss nach einem der Ansprüche 1 bis 6, **dadurch gekennzeichnet, dass** eine Sperrklinke (5) in eine Vorraststellung einfällt, sobald eine Beaufschlagung einer Bedieneinheit (19) unterbrochen wird.

8. Kraftfahrzeugtürschloss nach einem der Ansprüche 1 bis 7, **dadurch gekennzeichnet, dass** eine Sperrklinke (5) in ihrer Vorraststellung und in ihrer Hauptraststellung verschieden tief einfällt.

9. Kraftfahrzeugtürschloss nach einem der Ansprüche 1 bis 8, **dadurch gekennzeichnet, dass** ein Aktuator (12, 13) in seinem Weg derart begrenzbar ist, dass der Aktuator (12, 13) eine Sperrklinke (5) aus einer Vorrastposition und/oder aus einer Hauptrastposition herausheben kann.

10. Kraftfahrzeugtürschloss nach einem der Ansprüche 1 bis 9, **dadurch gekennzeichnet, dass** ein Schlossbügel einer Haube (3) nach zweimaliger Betätigung einer Handhabe (15) mittels einer Kraft einer Feder in eine Vorraststellung überführbar ist.

11. Kraftfahrzeugtürschloss nach einem der Ansprüche 1 bis 10, **dadurch gekennzeichnet, dass** ein Schlossbügel einer Haube (3) selbst bei einem leichten Ablegen der Haube (3) durch einen Bediener zumindest eine Vorraststellung erreicht.

## Claims

1. Motor vehicle door latch, in particular a motor vehicle front hood latch (2), comprising a locking mechanism (4, 5), consisting substantially of a catch (4) and pawl (5), which interacts with a latch holder bracket (8) on a hood (3), and comprising an unlocking/opening device (14, 15) for the hood (3), which is equipped with a handle (15) provided in the interior of a motor vehicle body, the handle (15) preferably being operated twice in order to open the hood (3), the locking mechanism (4, 5) assuming a pre-ratchet position with the still-trapped latch holder bracket (8) after at least one actuation of the handle (15), **characterized in that** the hood (3) is opened from the pre-ratchet position by a separately initiated motor-driven lifting of the pawl (5) from the catch (4), an actuator (12, 13) being provided for the motor-driven application of the pawl (5), the actuator (12, 13) being acted upon by means of an operating unit (19), which is independent of the handle (15), in the form of a remote key, a sensor (17) being provided which queries the pre-ratchet position, the sensor (17) and the actuator (12, 13) being connected to a common control unit (16), which allows application of the actuator (12, 13) for lifting of the pawl (5) from the catch (4) only when the sensor (17) has signaled the pre-ratchet position of the locking mechanism (4, 5).

2. Motor vehicle door latch according to claim 1, **characterized in that** the actuator (12, 13) is a pivot and/or linear actuator (12, 13).

3. Motor vehicle door latch according to claim 2, **characterized in that** the actuator (12, 13) has an electric motor (12) and control element, for example a pivot element and/or a linear control element (13).

4. Motor vehicle door latch according to claim 3, **characterized in that** the operating unit (19) is applied wirelessly to the actuator (12, 13).

5. Motor vehicle door latch according to any of claims 1 to 4,
**characterized in that** the handle (15) is actuated once in order to transfer the locking mechanism (4, 5) into the pre-ratchet position, and subsequently the hood can be opened by applying the operating unit (19).

6. Motor vehicle door latch according to any of claims 1 to 5,
**characterized in that** the handle (15) is actuated twice in order to transfer the locking mechanism (4, 5) into the pre-ratchet position, and subsequently the hood (3) can be opened by applying the operating unit (19).

7. Motor vehicle door latch according to any of claims 1 to 6,
**characterized in that** a pawl (5) engages into a pre-ratchet position as soon as an application of an operating unit (19) is interrupted.

8. Motor vehicle door latch according to any of claims 1 to 7,
**characterized in that** a pawl (5) engages at different depths in its pre-ratchet position and in its main ratchet position.

9. Motor vehicle door latch according to any of claims 1 to 8,
**characterized in that** an actuator (12, 13) can be restricted in its path such that the actuator (12, 13) can lift a pawl (5) out of a pre-ratchet position and/or out of a main ratchet position.

10. Motor vehicle door latch according to any of claims 1 to 9,
**characterized in that** a latch bracket of a hood (3) can be transferred into a pre-ratchet position by means of a force of a spring after a handle (15) is actuated twice.

11. Motor vehicle door latch according to any of claims 1 to 10,
**characterized in that** a latch bracket of a hood (3) reaches at least one pre-ratchet position even when the hood (3) is set down gently by an operator.

## Revendications

1. Serrure de portière de véhicule automobile, en particulier serrure de capot avant de véhicule automobile (2), comportant un dispositif d'encliquetage (4, 5) constitué essentiellement d'un pêne pivotant (4) et d'un cliquet d'arrêt (5) lequel dispositif d'encliquetage coopère avec un étrier de retenue de serrure (8) sur un capot (3), et comportant un dispositif de déverrouillage/d'ouverture (14, 15) pour le capot (3), lequel est équipé d'une manette (15) prévue à l'intérieur d'une carrosserie de véhicule automobile, un actionnement double de la manette (15) étant de préférence nécessaire pour l'ouverture du capot (3), le dispositif d'encliquetage (4, 5) adoptant, après au moins un actionnement unique de la manette (15), une position de préencliquetage dans laquelle l'étrier de retenue de serrure (8) est piégé comme auparavant, **caractérisée en ce que** le capot (3) est ouvert à partir de la position de préencliquetage par un décrochement motorisé initié séparément du cliquet d'arrêt (5) vis-à-vis du pêne pivotant (4), un actionneur (12, 13) étant prévu pour la sollicitation motorisée du cliquet d'arrêt (5), l'actionneur (12, 13) étant sollicité au moyen d'une unité de commande (19) indépendante de la manette (15) sous la forme d'une clé à télécommande, un capteur (17) étant prévu, lequel interroge la position de préencliquetage, le capteur (17) et l'actionneur (12, 13) étant connectés à une unité de commande (16) commune, laquelle n'autorise une sollicitation de l'actionneur (12, 13) pour le décrochement du cliquet d'arrêt (5) vis-à-vis du pêne pivotant (4) que lorsque le capteur (17) a signalé la position de préencliquetage du dispositif d'encliquetage (4, 5).

2. Serrure de portière de véhicule automobile selon la revendication 1,
**caractérisée en ce que** l'actionneur (12, 13) est un actionneur pivotant et/ou un actionneur linéaire (12, 13).

3. Serrure de portière de véhicule automobile selon la revendication 2,
**caractérisée en ce que** l'actionneur (12, 13) présente un moteur électrique (12) et un organe de réglage, notamment un organe pivotant et/ou un organe de réglage linéaire (13).

4. Serrure de portière de véhicule automobile selon la revendication 3,
**caractérisée en ce que** l'unité de commande (19) sollicite l'actionneur (12, 13) sans fil.

5. Serrure de portière de véhicule automobile selon l'une quelconque des revendications 1 à 4, **caractérisée en ce que** la manette (15) est actionnée une fois pour faire passer le dispositif d'encliquetage (4, 5) dans la position de préencliquetage, et le capot peut ensuite être ouvert par la sollicitation de l'unité de commande (19).

6. Serrure de portière de véhicule automobile selon l'une quelconque des revendications 1 à 5, **caractérisée en ce que** la manette (15) est actionnée deux fois pour faire passer le dispositif d'encliquetage (4, 5) dans la position de préencliquetage, et le capot (3) peut ensuite être ouvert par la sollicitation de l'unité de commande (19).

7. Serrure de portière de véhicule automobile selon l'une quelconque des revendications 1 à 6, **caractérisée en ce qu'**un cliquet d'arrêt (5) entre dans une position de préencliquetage aussitôt qu'une sollicitation d'une unité de commande (19) est interrompue.

8. Serrure de portière de véhicule automobile selon l'une quelconque des revendications 1 à 7, **caractérisée en ce qu'**un cliquet d'arrêt (5) entre à une profondeur différente selon qu'il se trouve dans sa position de préencliquetage ou dans sa position d'encliquetage principal.

9. Serrure de portière de véhicule automobile selon l'une quelconque des revendications 1 à 8, **caractérisée en ce qu'**un actionneur (12, 13) peut être limité dans son trajet de telle façon que l'actionneur (12, 13) peut soulever un cliquet d'arrêt (5) d'une position de préencliquetage et/ou d'une position d'encliquetage principal.

10. Serrure de portière de véhicule automobile selon l'une quelconque des revendications 1 à 9, **caractérisée en ce qu'**un étrier de serrure d'un capot (3) peut être déplacé, au moyen de la force d'un ressort, dans une position de préencliquetage après un double actionnement d'une manette (15).

11. Serrure de portière de véhicule automobile selon l'une quelconque des revendications 1 à 10, **caractérisé en ce qu'**un étrier de serrure d'un capot (3) atteint au moins une position de préencliquetage même lorsque le capot (3) est posé doucement par un opérateur.
